(19)

Europäisches
Patentamt
European
Patent Office
Office européen
des brevets

(11) **EP 2 863 374 A1**

(12) **EUROPEAN PATENT APPLICATION**
published in accordance with Art. 153(4) EPC

(43) Date of publication:
**22.04.2015 Bulletin 2015/17**

(21) Application number: **12879087.0**

(22) Date of filing: **14.06.2012**

(51) Int Cl.:
**G08G 1/16** *(2006.01)*  **B60R 21/00** *(2006.01)*

(86) International application number:
**PCT/JP2012/065275**

(87) International publication number:
**WO 2013/186903 (19.12.2013 Gazette 2013/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Toyota Jidosha Kabushiki Kaisha
Toyota-shi, Aichi 471-8571 (JP)**

(72) Inventor: **TAKEMAE, Yoshinao
Toyota-shi
Aichi 471-8571 (JP)**

(74) Representative: **TBK
Bavariaring 4-6
80336 München (DE)**

(54) **LANE PARTITION MARKING DETECTION APPARATUS, AND DRIVE ASSIST SYSTEM**

(57) A lane separation mark detection apparatus 100 includes imaging units 11 and 12 to capture a lane separation mark separating a lane on which a vehicle is traveling; a lane separation mark detection unit 24 to detect the lane separation mark from at least one piece of image data among pieces of image data, each piece of the image data being generated by the corresponding one of the imaging units; a road form estimation unit 25 to estimate a road form from the lane separation mark detected by the lane separation mark detection unit; and an image data determination unit 26 to determine, according to the lane separation mark depending on the road form estimated by the road form estimation unit, the piece of the image data to be used by the lane separation mark detection unit for detecting the lane separation mark.

FIG.2

```
          START

  DETECT WHITE LINES          S1
  IN CAPTURED IMAGE DATA

  ESTIMATE ROADWAY            S2
  PARAMETERS

          IS IT CURVED
  NO   IN OPPOSITE DIRECTION   S3
       TO CURRENT CAMERA
       FOR WHITE LINE
       DETECTION
          ?
          YES

  SWITCH CAMERAS              S4
  FOR WHITE LINE DETECTION
```

EP 2 863 374 A1

**Description**

[Technical Field]

The present invention relates to a lane separation mark detection apparatus to detect a lane separation mark marked on a road surface.

[Background Art]

Technologies have been known that perform various drive supports such as prevention of going out of a lane using images of white lines captured by a camera on a vehicle. Also, there are cases where a stereo camera is used as a camera to capture white lines with which distance information can be obtained. When detecting a white line captured by a stereo camera, there are two methods used by a white line detection apparatus to detect the white line:

(1) a method in which images for white line detection are fixed to either of those captured by the left camera or those captured by the right camera; and
(2) a method that uses an image region commonly captured by the left and right cameras for detection (see, for example, Patent Document 1). Patent Document 1 discloses an image processing apparatus that calculates 3D positional information from images captured by a stereo camera, and detects a white line existing on a road surface from the left and right images, respectively.

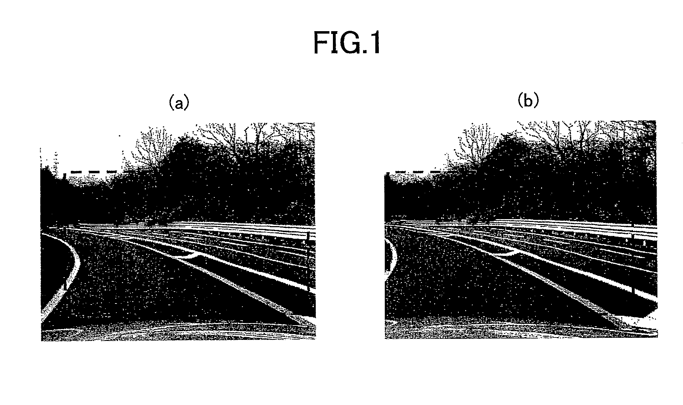

However, such a conventional white line detection method that uses a stereo camera has a problem in that a region where a white line is captured narrows in the image when the road is curved.
Namely, if the camera is fixed to the left for white line detection as above (1), the region narrows where a white line on the right side is captured when the road curves to the right, or if the camera is fixed to the right for white line detection, the region narrows where a white line on the left side is captured when the road curves to the left.
Also, it is the same for a case when using an image region commonly captured by the left and right cameras for detection as above (2); when the road curves to the right or left, the image region narrows where a white line is commonly captured.
This will be described using the drawings. FIG. 1 includes an example of images captured by a right camera and a left camera, respectively, when the road curves to the left. FIG. 1(a) illustrates an image of the left camera, and FIG. 1(b) illustrates an image of the right camera. In the illustrated circumstance, if images for white line detection are fixed to those captured by the right camera, the far-off white line on the left side cannot be detected.
Also, regions in dotted lines in the image of the left camera and the image of the right camera, respectively, correspond to a region commonly captured by the left and right cameras. Therefore, if using the image region commonly captured by the left and right cameras for detecting the white lines, the far-off white line on the left side cannot be detected similarly.
Note that such a problem arises because the left and right cameras of a stereo camera are separately placed in the vehicle width direction (the left and right cameras have a predetermined base line length), the right camera is placed rightward relative to the center in the vehicle width direction, and the left camera is placed leftward relative to the center in the vehicle width direction.
[Patent Document 1] Japanese Laid-open Patent Publication No. 2009-041972

[Summary of the Invention]

[Problem to be Solved by Invention]

In view of the above problem, it is an object of the present invention to provide a lane separation mark detection apparatus that can improve detection precision of a lane separation mark regardless of a road form.

[Means to Solve the Problem]

According to at least one embodiment of the present invention, a lane separation mark detection apparatus includes a plurality of imaging units configured to capture a lane separation mark separating a lane on which a vehicle having the lane separation mark detection apparatus installed is traveling; a lane separation mark detection unit configured to detect the lane separation mark from at least one piece of image data among a plurality of pieces of image data, each piece of the image data being generated by the corresponding one of the imaging units; a road form estimation unit configured to estimate a road form from the lane separation mark detected by the lane separation mark detection unit;

and an image data determination unit configured to determine, according to the lane separation mark depending on the road form estimated by the road form estimation unit, the piece or pieces of the image data to be used by the lane separation mark detection unit for detecting the lane separation mark.

[Advantage of the Invention]

According to the present invention, it is possible to provide a lane separation mark detection apparatus that can improve detection precision of a lane separation mark regardless of a road form.

[Brief Description of Drawings]

FIG. 1 is an example of images captured by a right camera and a left camera, respectively, when a road curves to the left;
FIG. 2 is an example of a diagram illustrating general features of a white line detection apparatus;
FIG. 3 is an example of a general configuration diagram of a drive support system including a white line detection apparatus;
FIG. 4 is an example of a functional block diagram of a camera computer;
FIG. 5 includes diagrams illustrating an example of parallelized image data of a right camera and image data of a left camera;
FIG. 6 is an example of diagrams illustrating a search for parallax;
FIG. 7 is an example of diagrams illustrating coordinate systems;
FIG. 8 is an example of diagrams schematically illustrating white line detection;
FIG. 9 is an example of a flowchart illustrating steps of switching cameras for white line detection when a white line detection apparatus detects a white line;
FIG. 10 is an example of a diagram illustrating comparison between the lengths of outside and inside white lines;
FIG. 11 is an example of a functional block diagram of a camera computer; and
FIG. 12 is an example of a flowchart illustrating steps of switching cameras for white line detection when a white line detection apparatus detects a white line.

[Description of Reference Symbols]

11 right camera
12 left camera
13 camera computer
21 stereo image obtainment unit
22 distortion correction and parallelization unit
23 edge extraction unit
24 white line detection unit
25 roadway parameter estimation unit
26 process image switching unit
27 parallax calculation unit
29 white line length calculation unit
100 white line detection apparatus
200 drive support ECU
300 operational device

[Mode for Carrying Out the Invention]

In the following, embodiments of the present invention will be described with reference to the drawings.

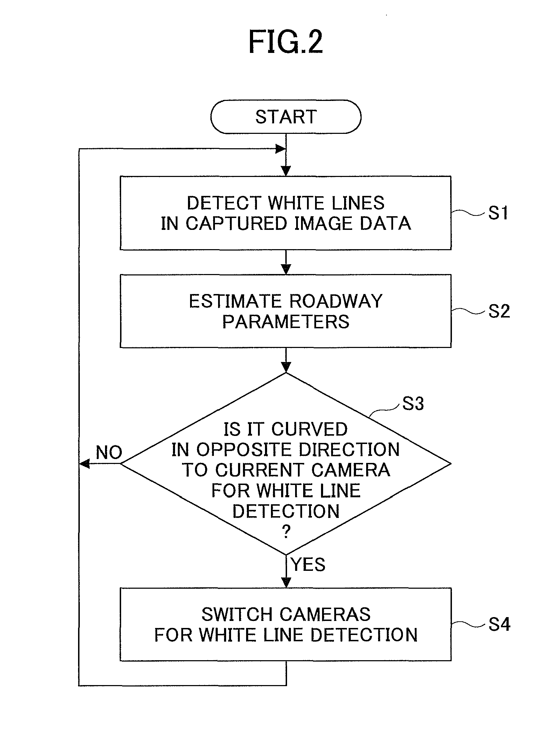

FIG. 2 is an example of a diagram illustrating general features of a white line detection apparatus according to the present embodiment. The white line detection apparatus has one of the left and right cameras set as the camera for white line detection beforehand as an initial setting (Step S3). For example, if the right camera is set as the camera for white line detection as the initial setting, a white line is detected from an image captured by the right camera.
The white line detection apparatus estimates roadway parameters from the detected white line (Step S2). The roadway parameters include, for example, the curvature and the radius of a road, and hence, the white line detection apparatus determines whether the road is curved (referred to as a "curve") in a direction opposite to the side where the current camera for white line detection (for example, as initially set) is placed (Step S3). Namely, if the right camera is the current camera for white line detection, the white line detection apparatus 100 determines whether the road curves in the left direction.

If the road is curved in a direction opposite to the side where the current camera for white line detection is placed (YES at Step S3), the white line detection apparatus 100 switches cameras for white line detection (Step S4). Namely, if the right camera is the current camera for white line detection, starting from the next image, images captured by the left camera are used as images for white line detection.

In this way, a far-off white line can be detected even when the camera to capture images for white line detection is set to one of the right camera or the left camera, and the road is curved in a direction opposite to the side where the current camera for white line detection is placed. Note that the white line detection apparatus continues to determine whether the road is curved, and if the road is curved in a direction opposite to the side where the current camera for white line detection is placed, it switches cameras for white line detection. By repeating this process, it can detect a far-off white line from images captured by either one of the left or right camera regardless the road form.

In the following, embodiments will be described. Note that, in the following embodiments, distinction is not specifically made between switching of cameras for white line detection, and switching of images for white line detection.

[First embodiment]

[Configuration example]

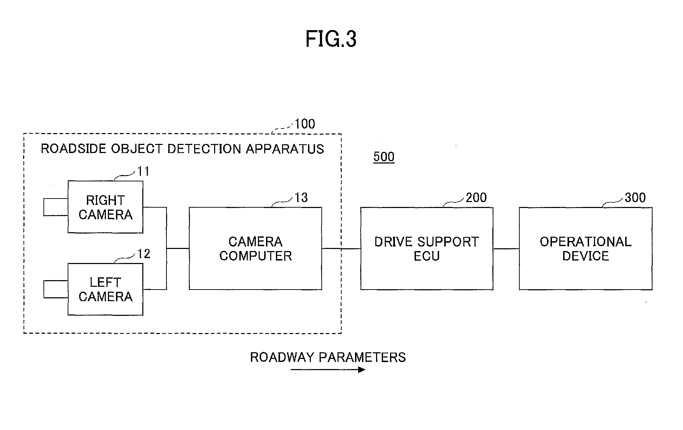

FIG. 3 is an example of a general configuration diagram of a drive support system 500 including a white line detection apparatus 100. The drive support system 500 includes the white line detection apparatus 100, a drive support ECU (Electronic Control Unit) 200, and an operational device 300, which are connected with each other via an in-vehicle LAN such as a CAN (Controller Area Network) bus. The white line detection apparatus 100 corresponds to a lane separation mark detection apparatus in the claims.

The white line detection apparatus 100 transmits target information about an obstacle in addition to roadway parameters, which will be described later, to the drive support ECU 200. The drive support ECU 200 determines whether a drive support is required based on the roadway parameters and the target information, and requests an operation to the operational device 300 when necessary. The operational device 300 includes, for example, an alarm device on a meter panel, an electric power steering device, and a brake actuator.

The roadway parameters include, for example, a road curvature (radius), a lane width of the road, a lateral position of the vehicle in the lane, and a yaw angle of the vehicle relative to the road. The drive support ECU 200 executes a drive support using information (for example, wheel speed, a steered angle, and a yaw rate) detected by other ECUs connected with the in-vehicle LAN or sensors. LDW (Lane Departure Warning) and LKA (Lane Keeping Assist) have been known as drive supports using the roadway parameters. LDW is a drive support that draws a driver's attention by an alarm or vibration if there is a risk that the vehicle goes out of a lane, from the lateral position, the yaw angle, and the vehicle speed. LKA is a drive support that controls an electric power steering device to add a steering torque to the steering shaft, or controls breaking on each wheel or engine output so that the vehicle runs on targeted running lines within the lane. Other than controlling a steering torque, breaking on each wheel, or engine output so that the vehicle runs on the targeted running lines, there is a type of LKA that controls to keep in the lane when there is a risk that the vehicle goes out of the lane. In this way, it is possible to provide various drive supports by detecting white lines.

Also, the target information includes, for example, distance information, relative speed, and an orientation (lateral position). The drive support ECU 200 extracts an obstacle having a risk of collision from the orientation (lateral position), and executes a drive support such as issuing an alarm sound or slowing down if TTC (Time To Collision) calculated from the distance information and the relative speed comes under a predetermined value.

The white line detection apparatus 100 includes a right camera 11, a left camera 12, and a camera computer 13. The right camera 11 and the left camera 12 constitute a single stereo camera. The stereo camera is disposed, for example, on a rearview mirror having the optical axis face in the front direction of the vehicle, or maybe disposed on another place such as a rooftop. The right camera 11 and the left camera 12 are disposed separated by a predetermined interval (base line length). The right camera 11 and the left camera 12 have individual imaging elements, respectively, such as CCDs, CMOSs, and back illumination CMOSs. The right camera 11 and the left camera 12 may be monochrome cameras to obtain just brightness information, or may be color cameras.

The right camera 11 and the left camera 12 periodically capture images in a predetermined range in front of the vehicle at virtually the same time, respectively. If a white line is marked on the road surface, the captured images may include the white line. Note that a white line in the present embodiment corresponds to a lane separation mark in the claims. The white line in the present embodiment is not limited to that marked on a road surface with white color, but includes a line-shaped road marking having a color other than white, a dotted line, a dashed line, Botts' dots or cat's-eyes. A lane separation mark is not limited to that marked white on a road surface, but includes, for example, a line-shaped colored mark colored in yellow or orange. Also, the white line is not limited to a line-shaped mark formed by a solid line continuing without gaps, but may be a dotted line formed by consecutive dots, or a dashed line having equal intervals (or different intervals) in a solid line. If it is a dotted line, for example, it can be converted into a straight line by applying Hough transform. Also, the white line is not limited to a flat mark, but may have a convex part relative to the road surface such as Botts' dots. As Botts' dots are consecutive points (for example, at equal intervals), they can be viewed as a line, similar to a dotted line. Also, road rivets such as cat's-eyes that reflect vehicle light or illuminate themselves to mark a boundary between lanes can be similarly viewed as a line if disposed consecutively.

The camera computer 13 is a computer including a CPU, a ROM, a RAM, a CAN controller, an input/output I/F, and other general circuits. The camera computer 13 executes distortion correction and parallelization, detection of a white line, estimation of roadway parameters, and detection of line segments in a far-off region as will be described later.

[Functions of camera computer]

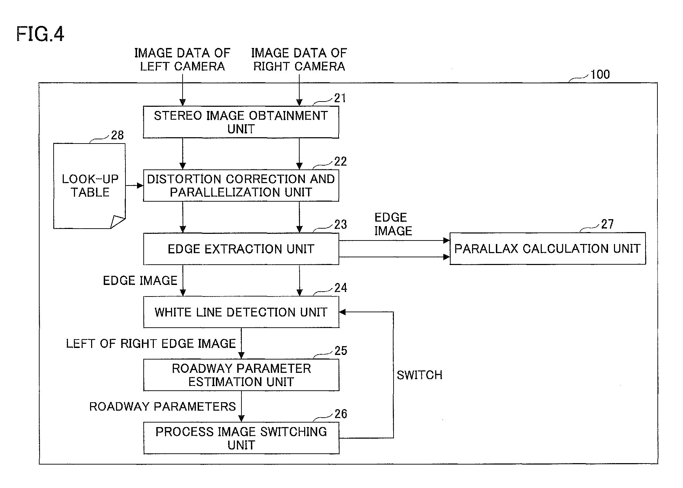

FIG. 4 is an example of a functional block diagram of the camera computer 13. The camera computer 13 includes a stereo image obtainment unit 21, a distortion correction and parallelization unit 22, an edge extraction unit 23, a white line detection unit 24, a roadway parameter estimation unit 25, a process image switching unit 26, and a parallax calculation unit 27. The stereo image obtainment unit 21 obtains image data periodically captured by the right camera 11 and image data periodically captured by the left camera 12, and stores the image data in a buffer.

[Distortion correction and parallelization]

The distortion correction and parallelization unit 22 corrects distortion of the left and right images using external parameters and internal parameters of the camera obtained in advance, and parallelizes the images. The inside parameters include, for example, respective distortion of lenses, distortion aberration, distortion of imaging elements, and focal distances of the right camera 11 and left camera 12. The effect of distortion of a lens can be reduced by correcting image data by referring to a correction conversion table generated based on design values of the lens. The effect of distortion aberration can be reduced by correcting image data based on a parameter estimation using a distortion aberration model in the radius direction.

The external parameters include, for example, numerical values of the attached position and the direction of a camera. As the attached positions (for example, heights) and directions (pitches, rolls, and yaws) of the left and right cameras have tiny differences, there are cases where the optical axes of the right camera and the left camera 12 do not have a completely equivalent height, and are not parallel to each other. Therefore, due to differences of the external parameters, for example, imaging systems of the right camera 11 and the left camera 12 may be relatively rotated with each other around the optical axes. To reduce such rotation, the stereo camera has calibration applied before shipment by a vehicle manufacturer. In calibration, a chart for distortion calibration is captured by the right camera 11 and the left camera 12, respectively. A lattice of black and white squares is drawn in a checkerboard pattern on the chart for calibration. For example, a corresponding relationship between pixels is identified so that the black and white squares in the image of the left camera 12 correspond to the black and white squares in the image of the right camera 11. The corresponding relationship is registered into a table in which, for example, for each pixel of the right camera 11, the position of a pixel before correction is associated with a converted position of the pixel.

The table corresponds to a lookup table 28 in FIG. 4 that includes data for distortion correction and parallelization for left and right images based on the internal parameters and the external parameters. By applying distortion correction and parallelization in this way, it is possible to search for parallax efficiently.

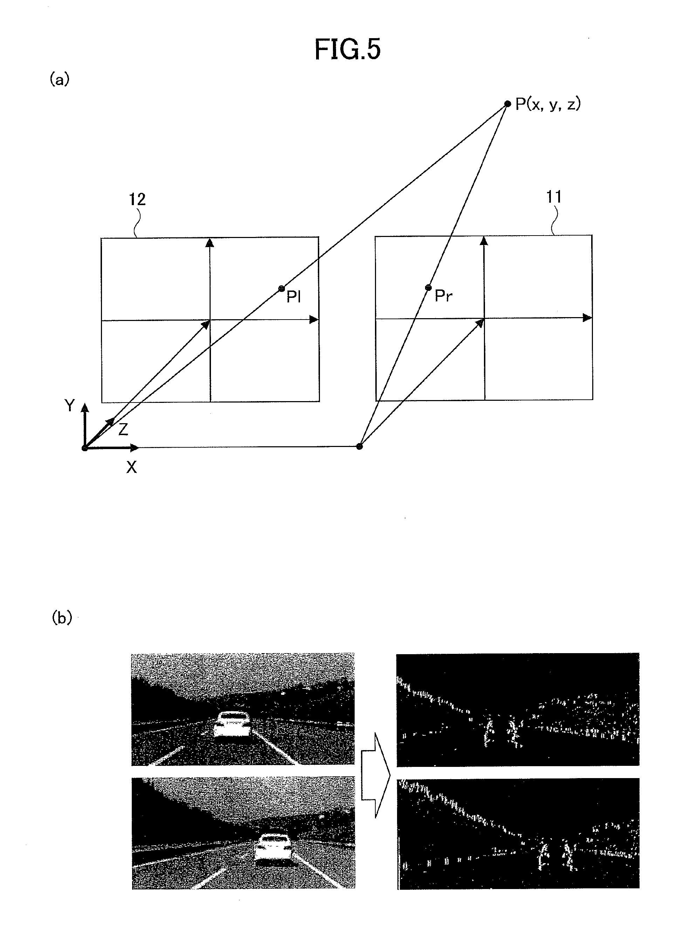

FIG. 5(a) is a diagram illustrating an example of parallelized image data of the right camera 11 and image data of the left camera 12. In the present embodiment, a road coordinate system is adopted in which the X axis corresponds to the vehicle width direction, the Y axis corresponds to the vehicle height direction, and the Z axis corresponds to the traveling direction. Coordinates P (x, y, z) correspond to a pixel Pl of the left camera 12 and a pixel Pr of the right camera 11. These correspondences will be described later.

[Edge extraction]

When detecting a parallax, correspondence between the pixel P1 and the pixel Pr is searched for. As two images have parallelization applied already, the white line detection apparatus 100 just needs to search for the correspondence in the image data only in a direction parallel to the horizontal direction.

Note that although the parallax search may be executed for the left and right image data having parallelization applied by the distortion correction and parallelization unit 22, the search can be made much easier after applying an edge highlight process to the image data. Thereupon, the edge extraction unit 23 extracts edges in the left and right images. Among various filters that have been known for edge extraction, a sobel filter may be used, for example.

FIG. 5(b) is a diagram illustrating an example of a result of a filter process. The upper row in FIG. 5(b) illustrates images of the right camera 11, and the lower row in FIG. 5(b) illustrates images of the left camera 12. Edge images are illustrated that are generated from brightness images, respectively. In the brightness images, white lines, a guardrail, and trees are captured. By applying the filter process, edge images of the right camera 11 and the left camera 12 are obtained in which edge parts of the white lines, guardrail, and trees are highlighted (designated by white pixels in the figure).

[Parallax detection]

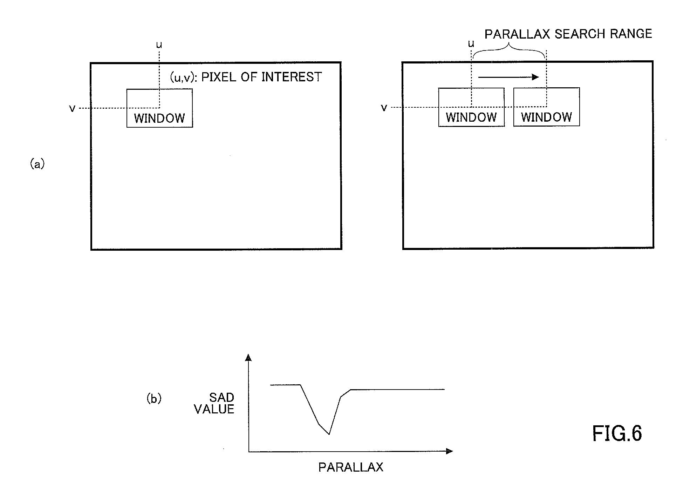

FIG. 6(a) is an example of a diagram illustrating a search for parallax. Here, by paying attention to a pixel of interest in the left image data, a region in the right image data is identified that corresponds to (has a highest correlation or a predetermined correlation or greater with) the right image data. The parallax calculation unit 27 calculates an SAD (Sum of Absolute Difference) or an SSD (Sum of Squared Differences) for each region including the pixel of interest (referred to as a "window" below). The SAD is the sum of absolute values of differences between pixel values, and the SSD is the sum of squares of differences of pixel values. For either of them, a smaller value means a higher equivalence between the images included in the window.

As illustrated, when paying attention to a pixel at (u, v), a rectangular window is generated centered on the pixel at (u, v), and the window is also generated in the right image centered on a pixel at (u, v). The parallax calculation unit 27 calculates the SAD or SSD for the window of the left image and the window of the right image, and repeats the calculation of the SAD or SSD by shifting the entire window of the right image to the right by one pixel and another. Namely, as the parallelization has been done already, the window does not need to be shifted in the V axis direction, but just shifted in the U direction one pixel by one pixel in the right image.

FIG. 6(b) illustrates an example of a relationship between a shift amount (parallax) in the U direction and an SAD. The SAD has a minimal value for the shift amount. If there are several minimal values, the shift amount of the pixel having the minimum value is the parallax at the pixel of interest (u, v) in the left image.

It is assumed that the a search range in the U direction is determined in advance. However, the parallax calculation unit 27 may calculate the SAD or SSD for all pixels in the U direction in the right image, or may execute calculation without specifying a search range and stop the calculation once a minimal value of the SAD or SSD less than or equal to a threshold is obtained. In the former way, the most reliable parallax is obtained, whereas in the latter way, a parallax reliable to a certain extent is efficiently obtained.

Note that the parallax may be obtained from the brightness images. Also, the parallax may be obtained from the edge images and the brightness images. When using both the edge images and the brightness images, the parallax is determined by taking an average of shift amounts of the pixel with which the SAD or SSD takes minimal values, or by giving weights to the edge images and the brightness images, respectively. This makes it possible to obtain a parallax more precisely.

In addition to an integer parallax obtained by the units of pixels, the parallax calculation unit 27 also calculates a sub-pixel parallax. Known methods to obtain a sub-pixel parallax includes equiangular fitting and parabola fitting.

By obtaining the parallax by units of pixels in this way, the distance to an object captured on a pixel can be calculated for each pixel.

$$\mathtt{distance\ =(f\ x\ m)/(n\ x\ d)}$$

where f represents the focal distance of the lens, m represents the base line length, n represents a parallax (the number of pixels), and d represents the pixel pitch of the imaging element.

[White line detection]

The white line detection unit 24 detects a white line in an image captured by the right camera 11 or the left camera 12. The image to be used for detecting a white line is set as follows.

(i) When the image of the right camera 11 is set as the image for white line detection soon after activation of the white line detection apparatus 100 (initial setting),
if a straight line or a right curve is detected from roadway parameters, it is set to the right camera 11; or
if a left curve is detected from the roadway parameters, it is set to the left camera 12,

and then, if the left curve is not detected from the roadway parameters, it is set back to the right camera 11, or it is kept to the left camera 12.

(ii) When the image of the left camera 12 is set as the image for white line detection soon after activation of the white line detection apparatus 100 (initial setting),

if a straight line or a left curve is detected from roadway parameters, it is set to the left camera 12; or

if a right curve is detected from the roadway parameters, it is set to the right camera 11,

and then, if the right curve is not detected from the roadway parameters, it is set back to the left camera 12, or it is kept to the right camera 11.

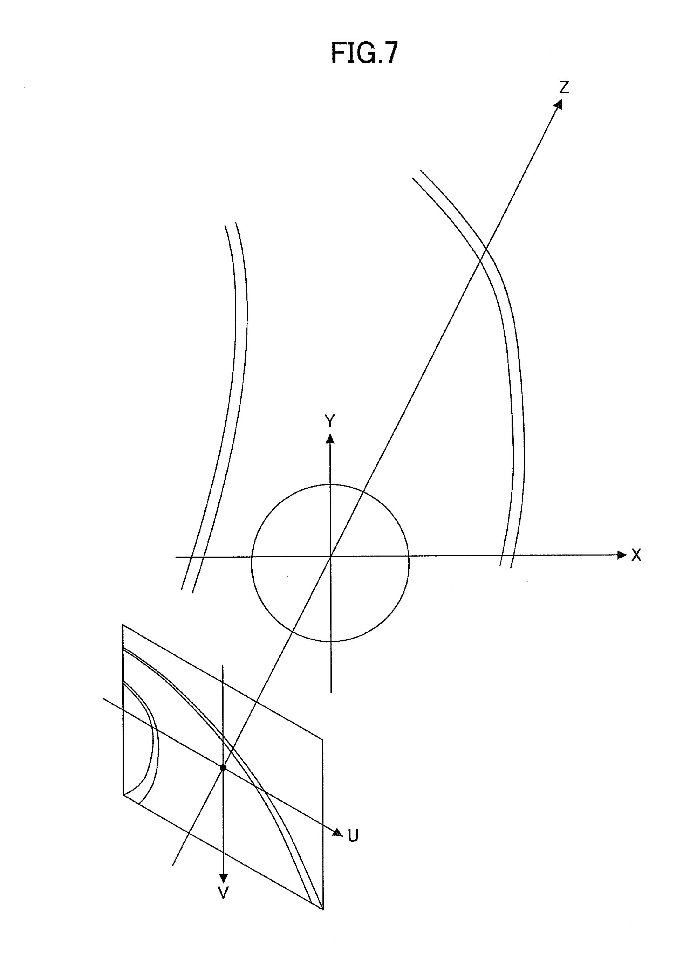

FIG. 7 is an example of diagrams illustrating coordinate systems for white line detection. In the present embodiment, the above road coordinate system using the X, Y, and Z directions, and a plane coordinate system specifying the plane coordinates of image data are used. For example, the center of the lens of the left camera 12 is set to the origin, the X-axis is taken in the horizontal direction from left to right, the Y-axis is taken in the height direction of the vehicle, and the Z-axis is taken in the traveling direction of the vehicle. The plane coordinate system has its origin on the Z-axis of the road coordinate system, the U-axis parallel to the X-axis, the V-axis parallel to the Y-axis.

By denoting the focal distance by f, and coordinates by lowercase letters x, y, and z, the conversion formula between the road coordinate system and the plane coordinate system is represented as follows. Note that it is assumed that the distance to an object from the lens is great enough to neglect the focal distance f.

$$v = -(y/z) \cdot f$$

$$u = (x/z) \cdot f$$

As the height of the stereo camera is fixed, the height from the road surface where a white line is marked is assumed to be a certain value, z in the road coordinate system can be obtained from v in the plane coordinates. Also, x at z obtained from v can be calculated using u in the plane coordinate system.

Also, even if only one image is used for white line detection, distance information z of each pixel can be obtained by the stereo camera, and x and y can be uniquely obtained using known z for each pixel.

Note that, in the present embodiment, either of the right camera 11 or the left camera 12 is possibly used for white line detection. Therefore, for example, the road coordinate system is corresponded with the plane coordinate system by using either of the right camera 11 or left camera 12 as a reference. If an image of the camera not used as the reference is used for white line detection, X coordinates of the road coordinate system is corrected by the base line length. Namely, if the left camera 12 is used as the reference, and the image of the right camera 11 is used for white line detection, x is set to x=x + base line length. In this way, generation of a shift in the road form can be suppressed if cameras for white line detection are switched.

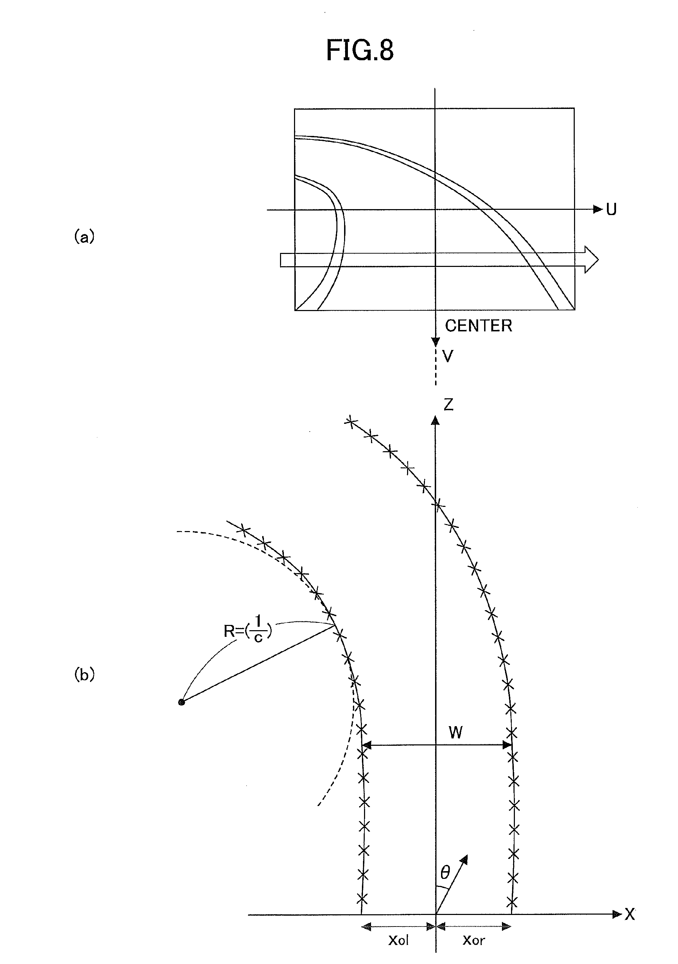

FIG. 8 is an example of diagrams schematically illustrating white line detection. FIG. 8(a) schematically illustrates image data (white lines in the plane coordinate system). The white line detection unit 24 identifies pixels having edge strengths greater than or equal to a threshold for edges extracted by the edge extraction unit 23. In FIG. 8(a), edges are obtained for left and right white lines, respectively. On the edges, the brightness is changed from that of the road to that of the white line, or changed from that of the white line to that of the road. Note that a region for detecting white lines may be restricted to a right side part and a left side part of an image, assuming that no white lines are around the center. This reduces a process load of the camera computer 13.

The white line detection unit 24 searches for pixels having edge strengths greater than or equal to the threshold in the image from bottom to top. Even if white lines are straight lines, they are captured as lines having the interval greater at the bottom than at the top in the image. Therefore, the search is repeated by extending multiple edges that have been searched for. If white lines exist, edges are obtained for the left and right white lines in the direction from bottom to top in the image, respectively. Such an edge is detected as a continuous line if a solid white line is favorably captured, or detected as a line having intervals if it is a set of points or a dashed line.

The white line detection unit 24 determines whether an edge is almost continuously detected, or if not detected but edges have equal intervals, to determine the edge(s) can be estimated as a part of a white line. If determining the edge(s) as a part of a white line, the white line detection unit 24 detects left and right white lines by comparing the width between the two edge line with a the width of a general white line, and removing non-white lines. Note that white lines do not necessarily exist in the left and right in the traveling direction, but only one white line may be detected.

The white line detection unit 24 plots the edges on the XZ plane using the corresponding formula between the road coordinate system and the plane coordinate system (plotting is not required in an actual process; it is just for the sake of explanation). FIG. 8(b) is an example of a schematic view illustrating edges converted into the coordinates (x, z) on the XZ plane. "X" marks correspond to the edges. Note that although edges are detected on both edges of a white line in FIG. 8(a), there are cases where approximation precision is better by using only one of the edges to approximate the road model. In this case, the white line detection unit 24 plots the edges on the XZ plane along the inside or the outside of a white line, or along calculated middle points of both sides in the X-direction.

[Estimation of roadway parameters]

The roadway parameter estimation unit 25 estimates roadway parameters from the edges in FIG. 8(b). There are several methods to estimate the roadway parameters. There is a method that uses a formula of the road model, substitutes coordinates of multiple characteristic points in the formula, and identifies the coefficient of the road model by the least squares method that uses a maximum likelihood method such as a Kalman filter or a particle filter to estimate the coefficients.

A road model is defined, for example, as follows.

$$x = x_0 + \theta \times z + 0.5 \times c \times z^2 \quad \ldots (1)$$

$x_0$ is a distance $x_{0r}$ between the origin of the XZ plane and the white line on the right side when obtaining the roadway parameters of the white line on the right side, or a distance $x_{0l}$ between the origin of the XZ plane and the white line on the left side when obtaining the roadway parameter of the white line on the left side. $\theta$ is an angle formed between the optical axis of the right camera 11 or left camera 12, and a white line direction (yaw angle of the vehicle). $\theta$ takes a positive value in the right direction relative to the forward direction. The parameter c is the curvature of the road, which is negative for a left curve, or positive for a right curve following the definition of the XZ plane. In Formula (1), a shift by the yaw angle is corrected relative to $x_0$ as a reference point (if the vehicle has the yaw angle in the right direction, a white line is captured having a slope in the left direction, which is corrected), and the curvature c is built into the formula multiplied by the square of z.

The roadway parameter estimation unit 25 substitutes coordinates (x, z) of the edge line on the XZ plane in Formula (1), to obtain $\theta$ and c by the least squares method. In this way, among the roadway parameters, the yaw angle $\theta$ and the curvature c (radius R) of the road can be obtained. Also, the width W of the road may be obtained from $x_{0r}+x_{0l}$, or from x value of the white line at an arbitrary z coordinate. The position of the vehicle in a lane can be represented by, for example, $W/2-X_{0r}$ by setting the center position of the lane to zero (reference) (if the right side is taken as positive).

Note that there are various formulas to represent a road model such as a clothoid model or B-spline model. Although these may be used in the present embodiment, any road model may be used that can determine whether it is a right curve or a left curve.

[Switching images for white line detection]

Having obtained the roadway parameters, the process image switching unit 26 determines whether it is a right curve or a left curve based on the road curvature, and if switching is required, it issues a command to specify images to be used for white line detection to the white line detection unit 24.

For example, if the white line detection unit 24 uses images of the right camera 11 for white line detection, the process image switching unit 26 determines whether the following conditions are satisfied. If the absolute value of the curvature is greater than or equal to zero, it can be estimated as a curve.

    a. A left curve is detected.
    b. The absolute value of the curvature of the left curve is greater than or equal to a threshold 1.

By including the threshold 1 in the condition b, cameras for white line detection are not required to be switched if it is a gentle left curve. If the roadway parameter estimation unit 25 obtains the roadway parameters by using, for example, a Kalman filter, it requires several frames of image data for a stable estimation of the roadway parameters. Therefore, by not switching cameras for white line detection, it can continue to stably detect the roadway parameters.

If the above conditions are satisfied, and the white line detection unit 24 uses images of the left camera 12 for white line detection, the process image switching unit 26 determines whether the following conditions are satisfied.

    c. A right curve is detected.
    d. The absolute value of the curvature of the right curve is greater than or equal to the threshold 1.

As above, by using conditions such as a to d, images of the left camera 12 tend to be continuously used for white line detection once it has been switched to the left camera 12. If it is switched to the right camera 12 again, then, images of the right camera 12 tend to be continuously used for white line detection. Therefore, frequent switching can be avoided for cameras for white line detection.

Although the threshold value 1 may be fixed, it may be variable depending on the vehicle speed to be effective. When the vehicle speed is greater, the vehicle approaches a curve faster than when the vehicle speed is less. Therefore, if the vehicle speed is expected to be greater, a smaller threshold value 1 is set in the white line detection apparatus 100 beforehand. Therefore, when the vehicle speed is greater, images for white line detection can be switched earlier.

Also, if it is determined by the manufacturer that it is preferable to have the white line detection unit 24 prioritize to use images of the right camera 11 for white line detection, the condition d may be neglected (or the threshold value 1 may be set less), and switching may be performed to use images of the right camera 11 for white line detection if only another condition, or "c. a straight line or a right curve is detected", is satisfied. The conditions a and b remain as they are. In this way, for example, in a country or a region where it is comparatively difficult to detect a white line on the left side because it is not a solid line, but a dotted line, a dashed line, or a thin line, it is possible to prioritize to use images of the right camera 11 for white line detection by the condition b.

Conversely, if it is determined by the manufacturer that it is preferable to have the white line detection unit 24 prioritize to use images of the left camera 12 for white line detection, the conditions a and b may be switched by the conditions c and d. Namely, the condition b may be neglected (or the threshold value 1 may be set less), and switching may be performed to images of the left camera 12 for white line detection if only another condition, or "a. a straight line or a left curve is detected", is satisfied.

Also, although the white line detection unit 24 detects both white lines if there are left and right white lines beside the vehicle, if either of the left or right white line does not exist, it indicates identification information of an undetectable left or right white line to the process image switching unit 26. In this case, even if a left curve is detected, the process image switching unit 26 does not issue a command to the white line detection unit 24 to switch to the left camera 12 as long as a left white line is not detected. Similarly, even if a right curve is detected, the process image switching unit 26 does not issue a command to the white line detection unit 24 to switch to the right camera 11 as long as a right white line is not detected. In this way, cameras for white line detection can be prevented from being switched in a state such that a left or right white line is broken off due to a merging lane, detection of a white line is difficult due to rainy weather, detection of a white line is difficult due to degradation, or other vehicles park.

Note that, if both left and right white lines are not detected, the process image switching unit 26 does not make a determination whether to switch the cameras for white line detection.

[Operational steps]

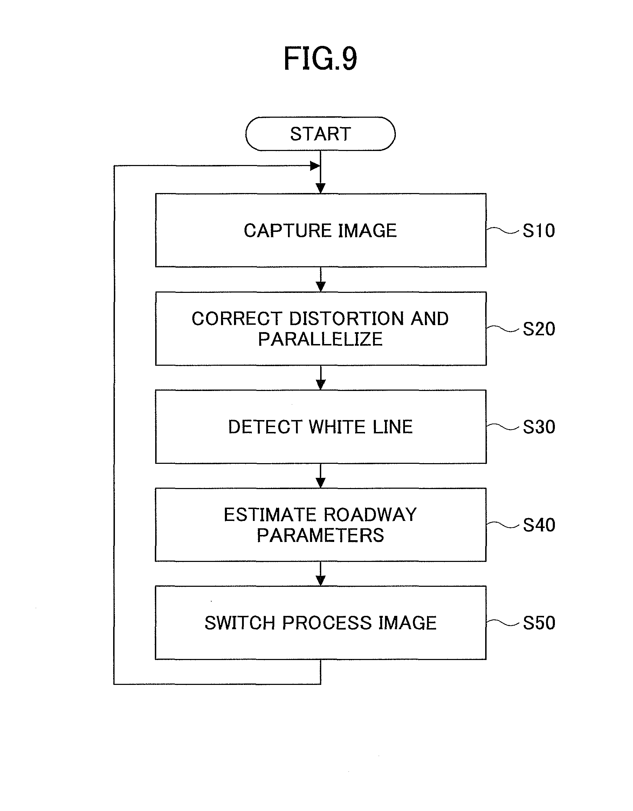

FIG. 9 is an example of a flowchart illustrating steps of switching cameras for white line detection when the white line detection apparatus 100 detects a white line.

The stereo image obtainment unit 21 obtains images captured by the right camera 11 and the left camera 12 of the stereo camera at virtually the same time (Step S10). Note that the stereo camera may have three or more cameras. In this case, the white line detection apparatus 100 identifies images among three cameras in which a white line is favorably detected to calculate a parallax or to estimate roadway parameters.

The distortion correction and parallelization unit 22 applies distortion correction and parallelization to the image of the right camera 11 and the image of the left camera 12 using, for example, the look-up table 28 (Step S20).

Next, the edge extraction unit 23 applies an edge extraction process to each of the image of the right camera 11 and the image of the left camera 12, and the white line detection unit 24 detects a white line in one of the image of the right camera 11 and the image of the left camera 12 (Step S30). Note that it is not necessary to prohibit detecting the white line from both the image of the right camera 11 and the image of the left camera 12. The white line may be detected from both images to select an image in which white line detection has been favorably performed to estimate roadway parameters. An image in which white line detection has been favorably performed is, for example, an image having greater number of edges, an image having interpolation with less distance when converting the edges into lines in the V axis direction.

Next, the roadway parameter estimation unit 25 estimates roadway parameters from the edges of the detected white line (Step S40).

The process image switching unit 26 determines whether the road ahead is curved in the right or left to switch images for white line detection, starting from the next image (Step S50). Namely, when images of the right camera 11 are used as images for white line detection, if it detects a left curve, it switches images of the left camera 12 to images for white line detection.

Note that, in addition to the roadway parameters, one or more of a steering direction by the driver, steering speed, and a yaw rate may be used when determining the curve direction of the road. When the driver steers the steering wheel along the road, the driver slowly starts steering, and then gradually increases the steering speed along a clothoid curve. Therefore, if the steering speed increases in a steering direction, the road ahead can be estimated to be curved in the steering direction. Also, other than the steering by the driver, the curve direction can be also estimated with a steered angle of the vehicle itself, known from such as a steered angle made by an electric power steering device when an LKA or the like operates.

As described above, the white line detection apparatus 100 in the present embodiment can capture a far-off white line and detect the far-off white line even if the road is curved, by switching images for white line detection depending on the road form. Detection of the far-off white line can improve precision of the roadway parameters.

[Second embodiment]

Existence of a curve and the curve direction are determined with the roadway parameters in the first embodiment. In a second embodiment, a white line detection apparatus 100 will be described that determines existence of a curve and the curve direction based on white line lengths.

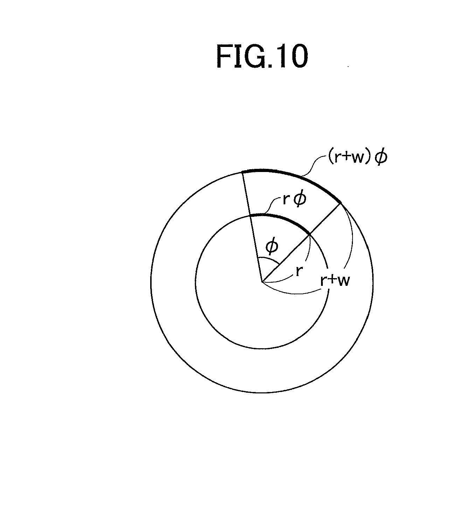

When a road is curved, a white line on the outside among left and right white lines is longer than the other white line on the inside. FIG. 10 is an example of a diagram illustrating comparison between the lengths of outside and inside white lines. Here, r represents the radius of an inner circle, $\varphi$ represents a predetermined angle corresponding to an assumed arc. The length of the inner arc is $r\varphi$, the length of the outer arc is $(r+W)\varphi$. Therefore, when a road is curved, the length of the white line on the outside is expected to be longer by $W\varphi$. Therefore, the curve direction can be estimated comparing the lengths of the left and right white lines.

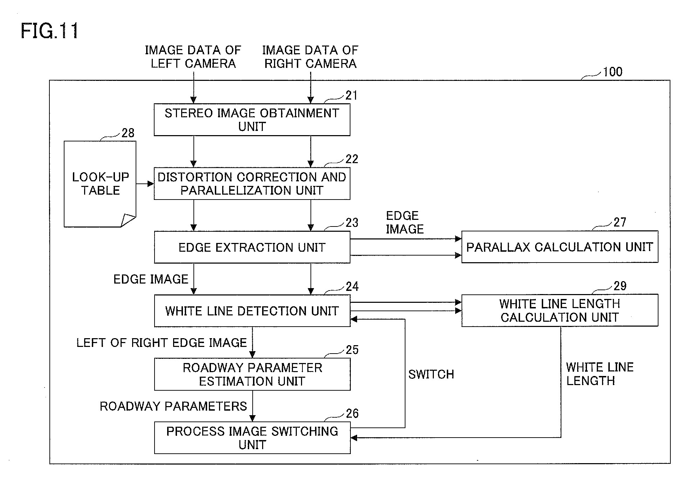

FIG. 11 is an example of a functional block diagram of a camera computer 13. Main functions in FIG. 11 will be described that are different from those in FIG. 4. The camera computer 13 in the present embodiment includes a white line length calculation unit 29.

The white line length calculation unit 29 searches for edge positions converted into the XZ plane as illustrated in FIG. 8(b) for a first edge to a last edge in the Z direction, to calculate the length of a part corresponding to a white line. Namely, it detects edges detected as the white line by increasing the Z coordinate in the direction from bottom to top to calculate distances between the edges. Then, it sums up the distances between the edges. By executing this for the left and right white lines, the lengths of the left and right white lines can be obtained.

Instead of calculating the sum of the distances between the edges in this way, the lengths of the white lines may be obtained by using the road model in the first embodiment. If the roadway parameters are known from coordinates of the road model and the edges, the length of a white line can be obtained by the next formula because the road form is represented by a function such as Formula (1). Note that the integral range is between the first edge and the last edge in the Z direction.

$$L=\int\sqrt{\{1+(dx/dz)^2\}}\,dz$$

The process image switching unit 26 detects a curve ahead if the lengths of the left and right white lines are different by greater than or equal to a threshold 2. Namely, if the white line on the left side is longer than the white line on the right side by the threshold 2 or greater, it determines it as a right curve, or if the white line on the right side is longer than the white line on the left side by the threshold 2 or greater, it determines it as a left curve. Note that, similarly to the first embodiment, cameras for white line detection can be assigned weights.

Also, the lengths may be compared for the white lines on the UV plane instead of compared on the XZ plane. When the road is curved, the outer curve is captured on the diagonal line of an image, the white line on the outside of the curve is also longer in this case.

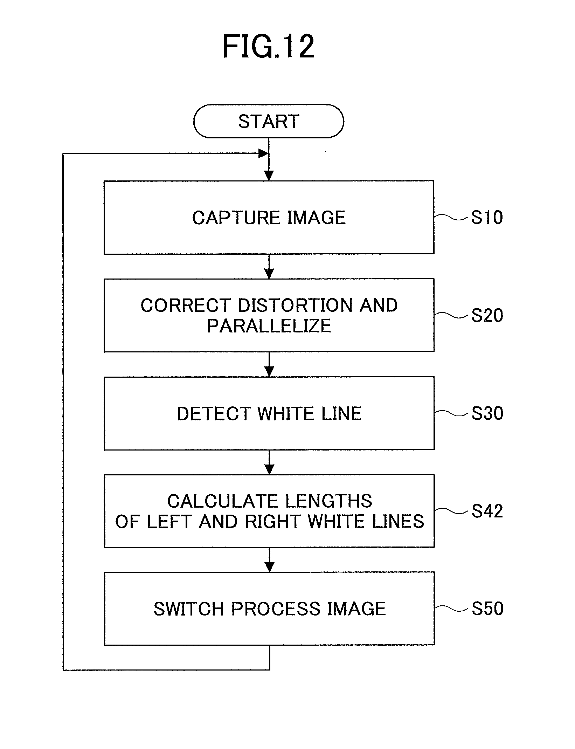

FIG. 12 is an example of a flowchart illustrating steps of switching cameras for white line detection when the white line detection apparatus 100 detects a white line. In FIG. 12, Step S40 in FIG. 9 is replaced by Step S42.

At Step S42, the white line length calculation unit 29 calculates the lengths of the left and right white lines (Step S42). The process image switching unit 26 compares the lengths of the left and right white lines to switch images for white line detection from the next image (Step S50). Namely, when images of the right camera 11 are used as images for white line detection, if it detects a left curve, it switched images of the left camera 12 to images for white line detection. Note that it may be combined with the first embodiment so that cameras for white line detection may be switched when it is determined that the road is curved based on at least either of the roadway parameters or the length of the white line.

As described above, the white line detection apparatus 100 in the present embodiment can switch images for white line detection by calculating the lengths of white lines to estimate the road form. Also, although a switching method of images for white line detection are described with the embodiments, the present invention is not limited to the above embodiments, but various modifications and improvements can be made within the scope of the present invention.

**Claims**

1. A lane separation mark detection apparatus comprising:

   a plurality of imaging units configured to capture a lane separation mark separating a lane on which a vehicle having the lane separation mark detection apparatus installed is traveling;
   a lane separation mark detection unit configured to detect the lane separation mark from at least one piece of image data among a plurality of pieces of image data, each piece of the image data being generated by the corresponding one of the imaging units;
   a road form estimation unit configured to estimate a road form from the lane separation mark detected by the lane separation mark detection unit; and
   an image data determination unit configured to determine, according to the lane separation mark depending on the road form estimated by the road form estimation unit, the piece or pieces of the image data to be used by the lane separation mark detection unit for detecting the lane separation mark.

2. The lane separation mark detection apparatus as claimed in claim 1, wherein if the road form estimated by the road form estimation unit indicates that a road ahead is curved, the image data determination unit determines the piece of the image data generated by the imaging unit closest in the curved direction among the imaging units separately installed on the vehicle in a vehicle width direction as the piece of the image data to be used by the lane separation mark detection unit for detecting the lane separation mark.

3. The lane separation mark detection apparatus as claimed in claim 2, wherein the road form estimation unit estimates a curvature of the road as the road form,
   wherein if the curvature of the road is greater than or equal to a threshold, the image data determination unit determines the piece of the image data generated by the imaging unit closest in the curved direction among the imaging units as the piece of the image data to be used by the lane separation mark detection unit for detecting the lane separation mark.

4. The lane separation mark detection apparatus as claimed in claim 2, wherein the road form estimation unit estimates a curvature of the road as the road form,
   wherein the piece of the image data to be preferentially used by the lane separation mark detection unit for detecting the lane separation mark is determined beforehand among the pieces of the image data to be generated by the respective imaging units,
   wherein if the lane separation mark detection unit detects the lane separation mark from the piece of the image data preferentially used by the lane separation mark detection unit, and if the curvature of the road is greater than or equal to a threshold, the image data determination unit determines the piece of the image data generated by the imaging unit closest in the curved direction among the imaging units as the piece of the image data to be used by the lane separation mark detection unit for detecting the lane separation mark, and
   if the lane separation mark detection unit detects the lane separation mark from the piece of the image data that is not the piece of the image data to be preferentially used by the lane separation mark detection unit, and if the curvature of the road is as small as that of a straight road, the image data determination unit determines the piece of the image data to be preferentially used by the lane separation mark detection unit as the piece of the image data to be used for detecting the lane separation mark.

5. The lane separation mark detection apparatus as claimed in any one of claims 1 to 4, wherein the image data determination unit estimates the road form based on a steered angle of the vehicle in addition to the lane separation mark detected by the lane separation mark detection unit.

6. The lane separation mark detection apparatus as claimed in claim 1, further comprising:

   a length calculation unit configured to calculate a length of the lane separation mark detected by the lane separation mark detection unit,
   wherein the image data determination unit estimates the road form depending on a comparison result of the lengths of the lane separation marks on the left and the right of the vehicle calculated by the length calculation unit.

7. The lane separation mark detection apparatus as claimed in claim 1, wherein the road form estimation unit estimates a width of the road, a position of the vehicle in the width direction, and a yaw angle relative to the lane separation mark.

8. A drive support system comprising:

a lane separation mark detection apparatus; and
a drive support apparatus connected with the lane separation mark detection apparatus via an in-vehicle network, wherein the lane separation mark detection apparatus includes
a plurality of imaging units configured to capture a lane separation mark separating a lane on which a vehicle having the lane separation mark detection apparatus installed is traveling,
a lane separation mark detection unit configured to detect the lane separation mark from at least one piece of image data among a plurality of pieces of image data, each piece of the image data being generated by the corresponding one of the imaging units,
a road form estimation unit configured to estimate a road form from the lane separation mark detected by the lane separation mark detection unit, and
an image data determination unit configured to determine, according to the lane separation mark depending on the road form estimated by the road form estimation unit, the piece or pieces of the image data to be used by the lane separation mark detection unit for detecting the lane separation mark,
wherein the drive support apparatus supports to prevent the vehicle from being deviated from the lane based on a width of the road estimated by the road form estimation unit, a position of the vehicle in the width direction, and a yaw angle relative to the lane separation mark.

# FIG.1

(a)

(b)

# FIG.2

```
           ┌─────────────┐
           │    START    │
           └─────────────┘
                  │
    ┌─────────────┼──────────────────────┐
    │             ▼                       │
    │   ┌─────────────────────┐          │
    │   │   DETECT WHITE LINES │  ～S1    │
    │   │ IN CAPTURED IMAGE DATA│         │
    │   └─────────────────────┘          │
    │             │                       │
    │             ▼                       │
    │   ┌─────────────────────┐          │
    │   │   ESTIMATE ROADWAY  │  ～S2     │
    │   │     PARAMETERS      │          │
    │   └─────────────────────┘          │
    │             │                       │
    │             ▼         ～S3          │
    │        IS IT CURVED                 │
    │   NO  IN OPPOSITE DIRECTION         │
    │ ◄──── TO CURRENT CAMERA             │
    │        FOR WHITE LINE               │
    │         DETECTION                   │
    │            ?                        │
    │            │YES                     │
    │            ▼                        │
    │   ┌─────────────────────┐          │
    │   │   SWITCH CAMERAS    │  ～S4     │
    │   │ FOR WHITE LINE DETECTION│       │
    │   └─────────────────────┘          │
    │            │                        │
    └────────────┴────────────────────────┘
```

DETECT WHITE LINES
IN CAPTURED IMAGE DATA ～S1

ESTIMATE ROADWAY
PARAMETERS ～S2

IS IT CURVED
IN OPPOSITE DIRECTION
TO CURRENT CAMERA
FOR WHITE LINE
DETECTION
? ～S3

NO

YES

SWITCH CAMERAS
FOR WHITE LINE DETECTION ～S4

# FIG.3

ROADSIDE OBJECT DETECTION APPARATUS — 100

500

| | | |
|---|---|---|
| RIGHT CAMERA — 11 | | |
| LEFT CAMERA — 12 | CAMERA COMPUTER — 13 | DRIVE SUPPORT ECU — 200 |

OPERATIONAL DEVICE — 300

ROADWAY PARAMETERS →

# FIG.4

IMAGE DATA OF    IMAGE DATA OF
LEFT CAMERA    RIGHT CAMERA

~100

~21
STEREO IMAGE OBTAINMENT
UNIT

~28
LOOK-UP
TABLE

~22
DISTORTION CORRECTION AND
PARALLELIZATION UNIT

EDGE
IMAGE

~23
EDGE EXTRACTION UNIT

~27
PARALLAX CALCULATION UNIT

EDGE IMAGE

~24
WHITE LINE DETECTION UNIT

LEFT OF RIGHT EDGE IMAGE

~25
ROADWAY PARAMETER
ESTIMATION UNIT

SWITCH

ROADWAY PARAMETERS

~26
PROCESS IMAGE SWITCHING
UNIT

# FIG.5

(a)

(b)

(a)

u

(u,v): PIXEL OF INTEREST

v

WINDOW

PARALLAX SEARCH RANGE

u

v

WINDOW WINDOW

(b)

SAD
VALUE

PARALLAX

FIG.6

# FIG.7

# FIG.8

(a)

(b)

# FIG.9

```
          ┌─────────────┐
          │    START    │
          └─────────────┘
                 │
    ┌────────────┼──────────────────────┐
    │            ▼                       │
    │   ┌─────────────────────┐         │
    │   │   CAPTURE IMAGE     │ ～S10   │
    │   └─────────────────────┘         │
    │            │                       │
    │            ▼                       │
    │   ┌─────────────────────┐         │
    │   │ CORRECT DISTORTION  │ ～S20   │
    │   │  AND PARALLELIZE    │         │
    │   └─────────────────────┘         │
    │            │                       │
    │            ▼                       │
    │   ┌─────────────────────┐         │
    │   │  DETECT WHITE LINE  │ ～S30   │
    │   └─────────────────────┘         │
    │            │                       │
    │            ▼                       │
    │   ┌─────────────────────┐         │
    │   │  ESTIMATE ROADWAY   │ ～S40   │
    │   │    PARAMETERS       │         │
    │   └─────────────────────┘         │
    │            │                       │
    │            ▼                       │
    │   ┌─────────────────────┐         │
    │   │ SWITCH PROCESS IMAGE│ ～S50   │
    │   └─────────────────────┘         │
    │            │                       │
    └────────────┘                       
```

# FIG.10

**FIG.11**

IMAGE DATA OF LEFT CAMERA    IMAGE DATA OF RIGHT CAMERA

100

STEREO IMAGE OBTAINMENT UNIT — 21

LOOK-UP TABLE — 28

DISTORTION CORRECTION AND PARALLELIZATION UNIT — 22

EDGE EXTRACTION UNIT — 23

EDGE IMAGE

PARALLAX CALCULATION UNIT — 27

EDGE IMAGE

WHITE LINE DETECTION UNIT — 24

WHITE LINE LENGTH CALCULATION UNIT — 29

LEFT OF RIGHT EDGE IMAGE

ROADWAY PARAMETER ESTIMATION UNIT — 25

SWITCH

WHITE LINE LENGTH

ROADWAY PARAMETERS

PROCESS IMAGE SWITCHING UNIT — 26

# FIG.12

START

CAPTURE IMAGE — S10

CORRECT DISTORTION AND PARALLELIZE — S20

DETECT WHITE LINE — S30

CALCULATE LENGTHS OF LEFT AND RIGHT WHITE LINES — S42

SWITCH PROCESS IMAGE — S50

## INTERNATIONAL SEARCH REPORT

| International application No. |
| --- |
| PCT/JP2012/065275 |

**A. CLASSIFICATION OF SUBJECT MATTER**
*G08G1/16*(2006.01)i, *B60R21/00*(2006.01)i

According to International Patent Classification (IPC) or to both national classification and IPC

**B. FIELDS SEARCHED**

Minimum documentation searched (classification system followed by classification symbols)
G08G1/16, B60R21/00

Documentation searched other than minimum documentation to the extent that such documents are included in the fields searched
Jitsuyo Shinan Koho           1922-1996   Jitsuyo Shinan Toroku Koho   1996-2012
Kokai Jitsuyo Shinan Koho     1971-2012   Toroku Jitsuyo Shinan Koho   1994-2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2010-69922 A (Toyota Motor Corp.), 02 April 2010 (02.04.2010), paragraph [0027] (Family: none) | 1-8 |
| A | JP 2008-225822 A (Toyota Motor Corp.), 25 September 2008 (25.09.2008), paragraph [0041] (Family: none) | 1-8 |
| A | JP 2005-343417 A (Autonetworks Technologies, Ltd.), 15 December 2005 (15.12.2005), paragraphs [0023] to [0024] (Family: none) | 1-8 |

☒  Further documents are listed in the continuation of Box C.        ☐  See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 09 August, 2012 (09.08.12) | 21 August, 2012 (21.08.12) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2012/065275

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2001-250199 A  (Toyota Central Research and Development Laboratories, Inc.), 14 September 2001 (14.09.2001), paragraphs [0017] to [0018] (Family: none) | 1-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009041972 A